# EUROPÄISCHE PATENTSCHRIFT

(11) **EP 1 783 879 B1**
(45) Veröffentlichungstag und Bekanntmachung des Hinweises auf die Patenterteilung: **19.06.2013**
(21) Anmeldenummer: 05023996.1
(22) Anmeldetag: 03.11.2005
(51) Int. Cl.: H02K 3/50

(54) **Elektrische Maschine**
Electrical machine
Machine électrique

(43) Veröffentlichungstag der Anmeldung: 09.05.2007
(73) Patentinhaber: Siemens Aktiengesellschaft, 80333 München (DE)
(72) Erfinder: Beck, Ronald, Dr., 45475 Mülheim an der Ruhr (DE); Ehehalt, Ulrich, 45131 Essen (DE); Kowalski, Waldemar, 45472 Mülheim an der Ruhr (DE); Lehmann, Christoph, Dr., 47506 Neukirchen-Vluyn (DE); Richter, Christoph, Dr., 49477 Ibbenbüren (DE); Spiess, Karlheinz, 47445 Moers (DE)

(56) Entgegenhaltungen:
- DE-A1- 19 544 699
- US-A- 2 749 460
- US-A- 5 355 046
- US-A- 5 994 813
- PATENT ABSTRACTS OF JAPAN Bd. 2000, Nr. 01, 31. Januar 2000 (2000-01-31) -& JP 11 299158 A (MITSUBISHI ELECTRIC CORP), 29. Oktober 1999 (1999-10-29)

## Beschreibung

### Elektrische Maschine

Die vorliegende Erfindung betrifft eine elektrische Maschine mit einem drehfest angeordneten Stator und einem drehbar gelagerten Läufer nach dem Oberbegriff des Anspruchs 1, so wie sie aus der US 5 355 046 bekannt ist.

Elektrische Maschinen werden zur Umwandlung mechanischer in elektrischer Energie bzw. umgekehrt vorgesehen. Eine verbreitete Ausführungsform der elektrischen Maschine ist die so genannte rotierende elektrische Maschine. Diese weist einen in einem Gehäuse drehbar gelagerten Läufer auf, wobei das Gehäuse mit einem in der Regel drehfest angeordneten Stator verbunden ist. Der Läufer kann entweder als Innenläufer oder als Außenläufer ausgebildet sein. Rotierende elektrische Maschinen werden häufig mit Wechselspannung an einem öffentlichen Energieversorgungsnetz betrieben. Verbreitet ist bei mittleren und großen Leistungen der Betrieb an einem 3-Phasen-Netz. Die Maschinen werden also oftmals mit Wechselstrom betrieben. Aber auch bei Gleichstrommaschinen treten Wechselströme auf, und zwar durch die mittels eines Kommutators umgepolte Wicklung während der Rotation.

Jede elektrische Maschine weist eine elektrische Wicklung auf, mittels der durch Stromfluss ein magnetisches Feld erzeugbar ist. Dieses Magnetfeld wirkt mit einem weiteren Magnetfeld eines Permanentmagneten oder einer weiteren Wicklung zusammen, und zwar derart, dass eine Kraft wirkt, die im Motorbetrieb zu der entsprechend gewünschten Bewegung führt. Bei rotierenden elektrischen Maschinen ist dies eine Drehbewegung. Im umgekehrten Fall, im Generatorbetrieb, wird mittels einer Bewegung und der Einwirkung eines Magnetfeldes ein elektrischer Strom erzeugt, der für weitere elektrische Anwendungen über ein elektrisches Netz bereitgestellt wird. Solche Maschinen sind in unterschiedlichsten Arten bekannt, so beispielsweise als Synchronmaschinen, Asynchronmaschinen, Gleichstrommaschinen und weitere.

Unter Wicklung im Sinne der vorliegenden Erfindung wird nicht nur das Vorsehen eines Wickels aus einem elektrisch leitfähigen Material wie beispielsweise Kupfer, Aluminium oder dergleichen verstanden, sondern grundsätzlich eine geeignete elektrisch leitfähige Schicht, mittels der aufgrund eines Stromflusses in ihr ein Magnetfeld erzeugbar ist, wie beispielsweise in der einfachsten Ausführung eines Kurzschlussläufers, einer Drehstromasynchronmaschine, die neben einer Statorwicklung für jede der drei Phasen einen Läufer aus einem elektrisch leitfähigen Vollmaterial, wie beispielsweise Eisen oder dergleichen aufweist. Solche Drehstrommaschinen sind beispielsweise aus dem Fachbuch "Der neuzeitliche Drehstrommotor", 4. Auflage, Loher & Söhne GmbH, Rustorf/Rott 1960, bekannt.

Um ein hinreichend starkes Magnetfeld zu erzeugen, besteht eine Wicklung in der Regel aus einer Vielzahl von isoliert zueinander angeordneten Windungen, wobei die Stärke des Magnetfeldes, die magnetische Flussdichte, sowohl mit zunehmender Windungszahl als auch mit zunehmendem Strom zunimmt. In einem aktiven Bereich der elektrischen Maschine, in dem die Kraftübertragung stattfindet, sind die Wicklungsabschnitte oftmals im wesentlichen parallel zu der Achse des Läufers geführt. Zur Führung des magnetischen Flusses sind die Leiter von einem Blechpaket aus einem magnetisch permeablen Werkstoff umgeben. An den Enden des aktiven Bereichs sind die einzelnen Leiter bedarfsgerecht miteinander elektrisch leitend zu einer Wicklung verbunden. Dieser Bereich, bzw. der Bereich der Wicklung, der aus dem Blechpaket herausragt, wird als Wicklungskopf bezeichnet (siehe auch Hütte IVA, Elektrotechnik, 28. Auflage, W. Ernst und Sohn, Berlin).

Aufgrund von mechanischen Einwirkungen auf die Einzelleiter der Windungen, und zwar hervorgerufen durch magnetische Kräfte, sowie auch durch mechanische Einwirkungen aufgrund des bestimmungsgemäßen Betriebs wie Vibrationen, Zentrifugalkräfte und dergleichen ist der Wicklungskopf üblicherweise mechanisch versteift, so dass ein dauerhafter, sicherer Betrieb der elektrischen Maschine gewährleistet werden kann. Im Stand der Technik werden hierzu in der Regel aufwendig angepasste Füllelemente sowie Stopfmaterialien verwendet, die zwischen den einzelnen Windungen im Wicklungskopf zwecks Versteifung angeordnet werden. Ergänzt werden diese Mittel durch weitere Fixierelemente wie Bandagen, um die mechanische Festigkeit zu erhöhen. Darüber hinaus sind Versteifungsringe vorgesehen, die den Wicklungskopf radial umgeben und diesen nach radial außen abstützen.

Gerade im Bereich der Mittel- und Großmaschinen, insbesondere Turbogeneratoren, wird der Wicklungskopf während des bestimmungsgemäßen Betriebs durch elektromagnetische und mechanische Kräfte zu Schwingungen mit zum Teil großen Amplituden angeregt. Dies führt zu einer mechanisch übermäßigen Beanspruchung, die nicht nur die Lösung des Wicklungskopfverbandes zur Folge hat, sondern auch Reibstaub erzeugt sowie weitere technische Probleme hervorruft, die bis zum Defekt der Wicklung im Bereich des Wicklungskopfs führen. Eine Ursache für dieses Problem wird darin gesehen, dass die Eigenfrequenz eines Wicklungskopfs oftmals im Bereich um 100 Hz liegt. Gerade beim Betrieb der elektrischen Maschine an einem öffentlichen Energieversorgungsnetz, welches in Europa und Asien mit einer Frequenz von 50 Hz betrieben wird, führt unter anderem zur Anregung der Eigenfrequenz des Wicklungskopfes, die unglücklicherweise etwa der doppelten Netzfrequenz entspricht. Effekte wie Magnetostriktion und ähnliches führen zu einer Frequenzverdopplung, so dass der Betrieb am öffentlichen Energieversorgungsnetz zu einer mechanischen Anregungsfrequenz von 100 Hz führt. Diese liegt im Bereich der Eigenfrequenz des Wicklungskopfes, woraus sich die vorgenannten Probleme ergeben.

Es ist nunmehr die Aufgabe der vorliegenden Erfindung, eine gattungsgemäße elektrische Maschine dahingehend weiterzubilden, dass die vorgenannten Probleme reduziert werden können.

Gelöst wird diese Aufgabe durch eine elektrische Maschine gemäß Anspruch 1.

Der Wicklungskopf ist radial nach außen von Stützplatten und/oder einem Stützring umgeben. Eine geeignete Ausbildung der Stützplatten und/oder des Stützringes ermöglicht es, die Eigenfrequenz des Wicklungskopfes weiter zu erhöhen. Darüber hinaus können die Stützplatten und/oder der Stützring so ausgelegt sein, dass sie eine Eigenschwingung des Wicklungskopfes dämpfen können.

Die Stützplatten und/oder der Stützring sind aus faserverstärktem Kunststoff oder Kohlenstoff gebildet. Eine hohe Belastbarkeit der Stützplatten und/oder des Stützrings kann bei geringer Masse erreicht werden.

Die Stützplatten und/oder der Stützring sind aus hochfestem Schaum gebildet. Bei hoher Stabilität kann eine weitere Reduzierung der Masse erreicht werden.

Erstmals ist es somit möglich, die mechanischen Probleme im Bereich des Wicklungskopfes dadurch zu reduzieren, dass seine Eigenfrequenz in einen Bereich verlagert wird, indem durch den bestimmungsgemäßen Betrieb nur noch eine geringe Anregung der Eigenfrequenz erfolgen kann. Durch die geringere Anregung reduzieren sich die Schwingungen im Wicklungskopf selbst, so dass die hierdurch verursachten Probleme reduziert werden können. Als Maßnahmen zur Reduzierung der Eigenfrequenz können geringere mechanische Abmessungen, geringere Massen und dergleichen zum Einsatz gebracht werden. Eine reduzierte Masse kann beispielsweise dadurch erreicht werden, dass anstelle eines Volleiters ein Hohlleiter für die Wicklung verwendet wird.

Der Wicklungskopf sollte in axialer Richtung der elektrischen Maschine eine geringe Erstreckung aufweisen. Die Reduzierung der Erstreckung führt dazu, dass der Schwingungsweg verkürzt wird, wodurch die Eigenfrequenz ansteigt.

Darüber sollten die benachbarten Leiter des Wicklungskopfes im Bereich der Evolventen im Wesentlichen ohne Abstand zueinander angeordnet sein. Hierdurch kann ein im Wesentlichen kompakter Wicklungskopf erreicht werden, wodurch auch hierdurch eine Erhöhung der Eigenfrequenz erreicht werden kann.

Der Wicklungskopf sollte einen großen Kegelwinkel aufweisen. Die Vergrößerung des Kegelwinkels erlaubt es, nicht nur die axiale Erstreckung zu reduzieren, sondern auch durch den größeren Außenradius die Eigenfrequenz des Wicklungskopfes positiv im Sinne einer höheren Eigenfrequenz zu beeinflussen. Die Wirkung der Eigenfrequenz kann weiter reduziert werden.

Im Bereich der Evolventen sollte eine dünne Isolationsschicht zwischen benachbarten Leitern des Wicklungskopfes angeordnet werden. Das Füllmaterial im Bereich des Wicklungskopfes kann reduziert werden, wodurch die Masse des Wicklungskopfes weiter reduziert werden kann.

In einer Weiterbildung wird vorgeschlagen, dass die Isolationsschicht Glimmer, Polyimid, PTFE, Polyester und/oder Polyamid aufweist. Eine kostengünstige Isolationsschicht kann erreicht werden, die zugleich bezüglich ihrer Dauerhaftigkeit während des bestimmungsgemäßen Betriebs optimiert sein kann.

Darüber hinaus wird vorgeschlagen, dass die Isolationsschicht eine Gewebematrix und/oder Fasern aufweist. Auf diese Weise kann die Isolationsschicht gegen mechanische Beanspruchungen verstärkt ausgebildet sein. Die Zuverlässigkeit der Isolationsschicht kann weiter verbessert werden.

Weiterhin wird vorgeschlagen, dass die Faserverstärkung durch ein Vlies, ein Nadelvlies, ein Keramikfasergewebe, ein Glasfasergewebe und/oder ein Mischgewebe hiervon gebildet ist. Die Belastbarkeit der Stützplatten und/oder des Stützrings kann weiter verbessert werden.

Ferner wird vorgeschlagen, dass die Stützplatten und/oder der Stützring eine Wabenstruktur aufweisen. Die Wabenstruktur erlaubt es, die Stützplatten und/oder den Stützring mit einer homogenen gleichbleibenden Stabilität auszubilden. Hierdurch kann eine weitere Reduzierung der Masse erreicht werden, die zu einer weiteren Erhöhung der Frequenz des Wicklungskopfes führen kann.

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet.

Es zeigen:
- Fig. 1: eine perspektivische Ansicht eines elektrischen Generators mit einem im Bereich des Wicklungskopfes aufgebrochenem Gehäuse;
- Fig. 2: eine schematisch vergrößerte Schnittansicht eines Wicklungskopfes gemäß dem Stand der Technik und
- Fig. 3: eine schematisch vergrößerte Schnittansicht eines Wicklungskopfes gemäß der vorliegenden Erfindung.

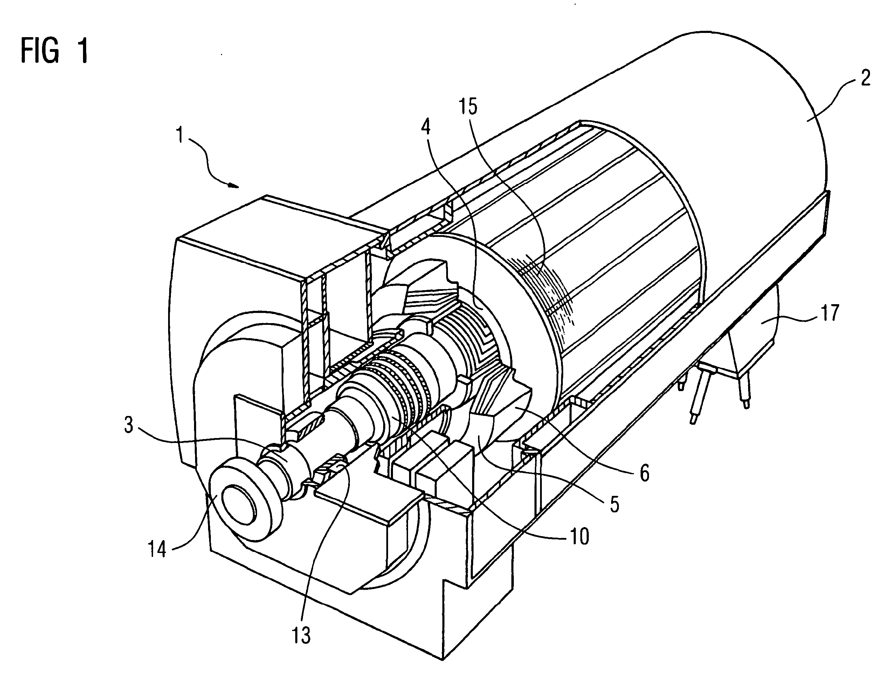

In Fig. 1 ist in schematisch perspektivisch aufgeschnittener Ansicht ein Ausschnitt aus einem Drehstromgenerator 1 dargestellt, der ein Gehäuse 2 aufweist, in dem ein Läufer 10 mit einer Rotorwelle 3 drehbar gelagert ist. Die Rotorwelle 3 weist an einem Ende einen Flansch 14 auf, über den dem Generator 1 ein Drehmoment zuführbar ist. Die Rotorwelle 3 ist mittels zweier Lagerungen 13 drehbar gelagert, von denen lediglich die flanschseitige Lagerung in Fig. 1 dargestellt ist. Die zweite Lagerung ist am gegenüberliegenden Ende der Rotorwelle 3 vorgesehen und aus Gründen der Übersichtlichkeit nicht dargestellt.

Im unteren hinteren Bereich weist das Gehäuse 2 einen elektrischen Anschlusskasten 17 zur elektrischen Verbindung des Generators 1 mit einem Verbraucher oder einem elektrischen Netz auf. Der Generator 1 ist vorliegend als 3-Phasen-Generator ausgebildet und zur Versorgung eines öffentlichen 3-Phasen-Netzes mit einer Betriebsfrequenz von 50 Hz vorgesehen.

Nicht dargestellt ist eine Turbine, deren Ausgangswelle mit dem Flansch 14 drehfest verbunden ist und die den Generator 1 mit mechanischer Energie versorgt. Der Generator 1 wandelt diese Energie in elektrische Energie um und speist diese in das öffentliche Netz.

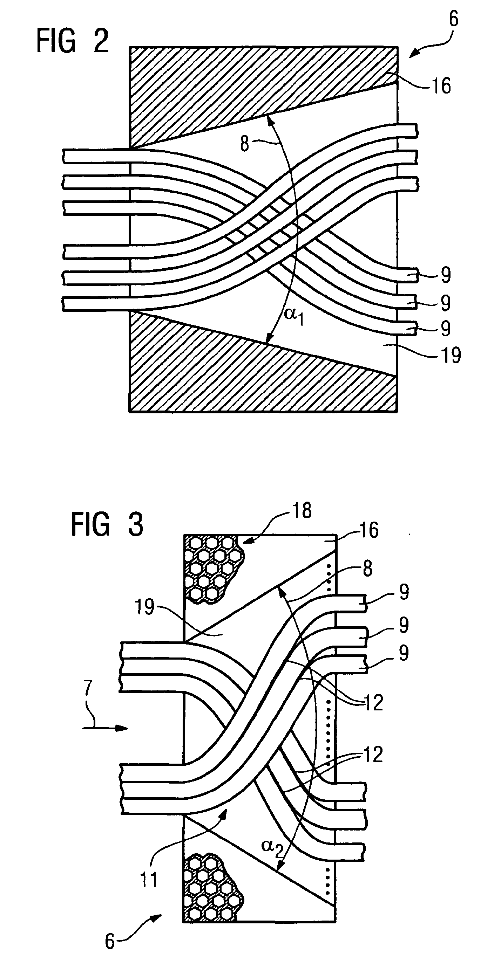

Fig. 2 zeigt einen Wicklungskopf für eine Maschine nach Fig. 1 gemäß dem Stand der Technik. Schematisch zeigt Fig. 2 einen Ausschnitt aus der Leiterführung mit Leitern 9, die im linken Bereich der Fig. 2 aus dem Blechpaket 15 heraustreten und zur Herstellung von Wicklungen im Bereich des Wicklungskopfes 6 Schleifen bilden. Die einzelnen Leiter 9 sind beabstandet zueinander angeordnet. Die Leiterschleifen 9 sind mechanisch von einem Stützring 16 gehalten, der die Leiterschleifen mechanisch nach radial außen abstützt. Der Stützring 16 ist zylindrisch ausgebildet und weist eine konische Öffnung 19 auf, deren kleinerer Durchmesser blechpaketseitig angeordnet ist und deren größerer Durchmesser im Bereich der Leiterschleifen angeordnet ist. Der Konus weist einen Öffnungswinkel 8 auf, der vorliegend ca. 20° beträgt. Die einzelnen Leiter 9 sind mittels nicht näher dargestellter Abstandsstücke gegeneinander auf Abstand festgelegt.

Der Wicklungskopf 6 gemäß Fig. 2 weist eine Eigenfrequenz von ca. 100 Hz auf. Dies liegt im Bereich der Frequenz, die aufgrund des bestimmungsgemäßen Betriebs als Anregungsfrequenz auf den Wicklungskopf 6 einwirkt. Der Wicklungskopf 6 wird deshalb zu Schwingungen angeregt, wodurch nicht nur erhöhter Verschleiß auftritt, sondern es werden auch die Leiter 9 im Bereich des Übergangs vom Blechpaket 15 in den Wicklungskopf 6 mechanisch bezüglich Scherung und Biegung beansprucht, so dass es im Laufe des Betriebs zu Ermüdungserscheinungen und Defekten in diesem Bereich kommen kann.

Fig. 3 zeigt einen Wicklungskopf 6 gemäß der vorliegenden Erfindung. Auch hier ist wieder ein Stützring 16 vorgesehen, der jedoch im Unterschied zur vorhergehenden Ausführung gemäß Fig. 2 eine Wabenstruktur 18 aufweist. Die Wabenstruktur 18 erlaubt es, die Masse des Stützrings 16 erheblich zu reduzieren, ohne dass die Stabilität dadurch wesentlich beeinträchtigt werden würde. Darüber hinaus sind die Leiter 9 im Bereich der Evolventen 11 direkt benachbart zueinander angeordnet. Aufgrund des geringen Abstands ist zwischen den Leitern 9 eine Isolationsschicht 12 aus Glimmer vorgesehen. Die in Fig. 2 nicht dargestellten Abstandshalter und Bandagen entfallen. Diese Ausgestaltung ermöglicht es, die Leiterschleifen im Bereich des Wicklungskopfes 6 in Richtung 7 deutlich zu verkürzen. Auch diese Maßnahme ist mit einer deutlichen Frequenzerhöhung verbunden. Dadurch ergibt sich für den Stützring 16 ein größerer Öffnungswinkel 8, der im vorliegenden Ausführungsbeispiel bei ca. 37° liegt.

Die Wirkung dieser Maßnahmen führt neben einer Verkürzung des Wicklungskopfes in Richtung 7 dazu, dass sich die Eigenfrequenz des Wicklungskopfes 6 deutlich erhöht, also über 100 Hz liegt. In der vorliegenden Ausgestaltung beträgt die Eigenfrequenz etwa 180 Hz. Der erreichte Wert der Eigenfrequenz hat darüber hinaus den Vorteil, dass er kein Vielfaches der Anregungsfrequenz ist. Hierdurch kann die Auswirkung von Resonanzen weiter reduziert werden. Zur weiteren Verbesserung der Stabilität ist der Stützring 16 aus faserverstärktem Kunststoff gebildet, wobei als Faserverstärkung Glasfasern vorgesehen sind.

Das in den Figuren dargestellte Ausführungsbeispiel dient lediglich der Erläuterung der Erfindung und ist für diese nicht beschränkend. So können insbesondere die verwendeten Werkstoffe oder auch deren Anwendung auf beliebige elektrische Maschinen variieren, ohne den Schutzbereich der Erfindung zu verlassen.

## Patentansprüche

1. Elektrische Maschine (1) mit einem drehfest angeordneten Stator und einem drehbar gelagerten Läufer (10),
wobei der Stator und/oder der Läufer (10) eine Wicklung (4, 5) aufweisen, deren Wicklungskopf (6) eine mechanische Eigenfrequenz größer als die doppelte elektrische Betriebsfrequenz aufweist,
wobei der Wicklungskopf (6) radial nach außen von Stütz-platten und/oder einem Stützring (16) umgeben ist,
**dadurch gekennzeichnet, daß**
die Stützplatten und/oder der Stützring (16) aus faserverstärktem Kunststoff oder Kohlenstoff gebildet sind,
wobei die Stützplatten und/oder der Stützring (16) aus hochfestem Schaum gebildet sind.

2. Elektrische Maschine nach Anspruch 1,
**dadurch gekennzeichnet, dass**
zumindest im Bereich der Evolventen (11) eine dünne Isolationsschicht (12) zwischen benachbarten Leitern (9) des Wicklungskopfes (6) angeordnet ist.

3. Elektrische Maschine nach Anspruch 2,
**dadurch gekennzeichnet, dass**
die Isolationsschicht (12) Glimmer, Polyimid, PTFE, Polyester und/oder Polyamid aufweist.

4. Elektrische Maschine nach Anspruch 3,
**dadurch gekennzeichnet, dass**
die Isolationsschicht (12) eine Gewebematrix und/oder Fasern aufweist.

5. Elektrische Maschine nach Anspruch 1,
**dadurch gekennzeichnet, dass**
die Faserverstärkung durch ein Vlies, ein Nadelvlies, ein Keramikfasergewebe, ein Glasfasergewebe und/oder einem Mischgewebe hiervon gebildet ist.

6. Elektrische Maschine nach einem der Ansprüche 1 bis 5,
**dadurch gekennzeichnet, dass**
die Stützplatten und/oder der Stützring (16) eine Wabenstruktur (18) aufweisen.

## Claims

1. Electrical machine (1) having a stator which is arranged in a rotationally fixed manner and a rotor (10) which is mounted in a rotatable manner, wherein the stator and/or the rotor (10) have a winding (4, 5), the winding head (6) of the said winding having a natural mechanical frequency which is greater than twice the electrical operating frequency,
wherein the winding head (6) is surrounded by supporting plates and/or a supporting ring (16) radially towards the outside, **characterized in that** the supporting plates and/or the supporting ring (16) are/is formed from a fibre-reinforced plastic or carbon,
wherein the supporting plates and/or the supporting ring (16) are/is formed from high-strength foam.

2. Electrical machine according to Claim 1,
**characterized in that**
a thin insulation layer (12) is arranged between adjacent conductors (9) of the winding head (6) at least in the region of the involutes (11).

3. Electrical machine according to Claim 2,
**characterized in that**
the insulation layer (12) comprises mica, polyimide, PTFE, polyester and/or polyamide.

4. Electrical machine according to Claim 3,
**characterized in that**
the insulation layer (12) comprises a woven fabric matrix and/or fibres.

5. Electrical machine according to Claim 1,
**characterized in that**
the fibre reinforcement is formed by a nonwoven, a needle-punched nonwoven, a ceramic-fibre woven fabric, a glass-fibre woven fabric and/or a mixed woven fabric of these.

6. Electrical machine according to one of Claims 1 to 5,
**characterized in that**
the supporting plates and/or the supporting ring (16) have/has a honeycomb structure (18).

## Revendications

1. Machine électrique
ayant un stator monté fixe en rotation et un rotor (10) monté tournant
dans lequel le stator et/ou le rotor (10) ont un enroulement (4, 5) dont la tête (6) a une fréquence propre plus grande que deux fois la fréquence électrique de fonctionnement,
dans laquelle la tête (6) de l'enroulement est entourée radialement vers l'extérieur de plaques d'appui et/ou d'un anneau (16) d'appui,
**caractérisée en ce que**
les plaques d'appui et/ou l'anneau (6) d'appui sont en une matière plastique renforcée par de la fibre ou en carbone.
les plaques d'appui et/ou l'anneau (16) d'appui étant en une mousse très résistante.

2. Machine électrique suivant la revendication 1,
**caractérisée en ce que**
au moins dans la région de la développante (11) une mince couche (12) isolante est disposée entre des conducteurs (9) voisins de la tête (6) de l'enroulement.

3. Machine électrique suivant la revendication 2,
**caractérisée en ce que**
la couche (12) isolante comporte du mica, un polyimide, un PTFE, un polyester et/ou un polyamide.

4. Machine électrique suivant la revendication 3,
**caractérisée en ce que**
la couche (12) isolante a une matrice de tissu et/ou des fibres.

5. Machine électrique suivant la revendication 1,
**caractérisée en ce que**
le renfort de fibres est formé par un non tissé, un non tissé aiguilleté, un tissu de fibres en céramique, un tissu de fibres de verre et/ou un tissu mixte de ceux-ci.

6. Machine électrique suivant les revendications 1 à 5,
**caractérisée en ce que**
les plaques d'appui et/ou l'anneau (16) d'appui ont une structure (18) en nid d'abeille.
